# EUROPEAN PATENT APPLICATION

(11) **EP 4 001 834 A1**
(43) Date of publication of application: **25.05.2022**
(21) Application number: 20207120.5
(22) Date of filing: 12.11.2020
(51) Int. Cl.: G01B 11/25, G01B 11/245, G01B 17/06, B29B 7/74, B29C 44/46, C08G 18/00, G01N 21/89, G01N 21/892, G01N 29/44

(54) **METHOD AND APPARATUS FOR ONLINE MONITORING OF FOAM QUALITY DURING FOAM PRODUCTION PROCESS**

(71) Applicant: Covestro Deutschland AG, 51373 Leverkusen (DE)
(72) Inventor: GAO, Jianwu, Baoshan District, Shanghai 201901 (CN); ZHANG, Jun, Shanghai, 201318 (CN)
(74) Representative: Levpat

(57) **Abstract**

The present invention relates to a process and an apparatus for producing foam using a continuous foam block foaming method, and in particular to a method and an apparatus for online monitoring of foam quality during a foam production process. In the method for online monitoring of foam quality in the foam production process according to the present invention, raw materials for foam production are injected onto a transporting slab of a conveyor via a mixing nozzle disposed at one end of the conveyor, the method comprising: continuously obtaining profile data for a cross section of the foam at a predetermined location to generate a topography map for a surface of the foam, the predetermined location being one along an advancing path of the transporting slab; and detecting foam defects based on the topography map for the surface of the foam.

## Description

### FIELD OF THE INVENTION

The present invention relates to a process and an apparatus for producing foam using a continuous foam block foaming method, and in particular to a method and an apparatus for online monitoring of foam quality during a foam production process.

### BACKGROUND OF THE INVENTION

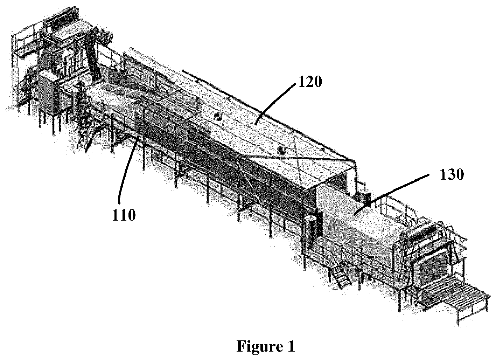

The continuous foam block foaming method is a common production process for polyurethane foam, which is very suitable for large-scale industrial production. In this process, polyols, isocyanates, water and auxiliary foaming agents, catalysts, stabilizers and other additives, as raw materials, are pumped into the mixing nozzle with precise metering. FIG. 1 is a view of a typical production apparatus using the continuous foam block foaming method. Referring to FIG. 1, these materials are spread on a slab 110 after being mixed by mechanical stirring or by other means, and the mixture is transported in the exhaust duct 120 by the slab. During the transportation process, the mixture undergoes chemical reactions and foams into a block 130 of a certain size (for example, with a maximum width of 220cm, a height of 120cm, and a length of no limitation). After the block (polyurethane foam) is made, it is cut into the required size and shape.

In the production process using the continuous foam block foaming method, foam defect is an important quality control indicator, which is directly related to the physical properties of the foam and also determines the material cost of subsequent products. In intelligent manufacturing, the monitoring of quality performance indicators is the basis for data analysis and quality optimization. However, there is currently no method and apparatus capable of online monitoring foam quality in an accurate and efficient manner.

### SUMMARY OF THE INVENTION

An -objective of the present invention is to provide a method and an apparatus for online monitoring of foam quality during a foam production process, which has the advantages of being simple, convenient and efficient.

In the method for online monitoring of foam quality during a foam production process according to one aspect of the present invention, raw materials for foam production are injected onto a transporting slab of a conveyor via a mixing nozzle disposed at one end of the conveyor, the method comprising:
continuously obtaining top profile data for a cross section of the foam at a predetermined location to generate a topography map for a surface of the foam, the predetermined location being one along an advancing path of the transporting slab; and
detecting foam defects based on the topography map for the surface of the foam.

Optionally, in the above method, the top profile data are obtained using laser sensors or ultrasonic sensors disposed above the foam at the cross section by means of line scan.

Optionally, in the above method, the top profile data comprise spatial position coordinates for respective points of top profiles of the foam, the topography map is obtained by assembling a plurality of top profiles, and the defects of the foam are detected by:
comparing a profile cut out from the topography map along a first direction with a first standard profile template, and comparing a profile cut out from the topography map along a second direction with a second standard profile template, wherein the first and second directions are perpendicular to a depth direction of the foam and are perpendicular to each other; and
determining existence and categories of the defects based on the comparison results.

Optionally, in the above method, the first standard profile template and the second standard profile template are in the form of characteristic thresholds or standard profile curves determined based on -product quality specifications.

Optionally, in the above method, the top profile data comprise spatial position coordinates for respective points of top profiles of the foam, the topography map is in the form of point cloud including the spatial position coordinates for the respective points of the top profiles of the foam, and the defects of the foam are detected by:
searching for a target region with an abrupt change in depth in the point cloud; and
determining existence and categories of the defects using a neural network model to identify the target region.

Optionally, in the above method, the categories of defects include surface crack, surface blistering and surface bulging.

Optionally, in the above method, the following step is further included: optimizing process parameters and/or formulations in the product manufacturing schemes by making comparisons among respective defect detection results for a plurality of product manufacturing schemes.

In the apparatus for online monitoring of foam quality during a foam production process according to another aspect of the present invention, raw materials for foam production are injected onto the transporting slab of the conveyor via a mixing nozzle disposed at one end of the conveyor, the apparatus comprising:
a top profile measuring unit configured to continuously obtain top profile data for a cross section of the foam at a predetermined location to generate a topography map for a surface of the foam, the predetermined location being one along an advancing path of the transporting slab; and
a calculating unit configured to detect the foam defects based on the topography map for the surface of the foam.

According to the embodiments of the present invention, the top profile data for the cross sections are obtained by means of line scan, and a topography map is obtained by assembling the top profile data of a series of cross sections. Since the scan is performed only along a single straight line, there is no need to perform complex motion correction algorithms when generating the topography map, and there is no need to select sensors with a high response speed. In addition, according to the embodiments of the present invention, defects are detected by using a template comparison method, which simplifies criteria for defect determination, and provides a capability for customized and flexible configuration. Furthermore, in several embodiments of the present invention, it is only necessary to scan the surface of the foam along a single straight line and the topography of the foam surface is relatively simple. This reduces the complexity of point cloud and facilitates the selection of simple recognition algorithms.

### BRIEF DESCRIPTION OF THE DRAWINGS

FIG. 1 is a view of a typical production apparatus using the continuous foam block method.
FIG. 2 is a side view of a typical production apparatus using the continuous foam block method.
FIG. 3 is a schematic diagram of obtaining a cross-sectional profile by scanning the top of the foam using laser sensors or ultrasonic sensors according to an embodiment of the present invention.
FIG. 4 is a schematic diagram of a top profile of a cross section of a foam product without surface defects obtained by being scanned by laser sensors or ultrasonic sensors.
FIGs.5A-5C are schematic diagrams of top profiles of cross sections of foam products with surface defects obtained by being scanned with laser sensors or ultrasonic sensors.
FIG. 6 exemplarily illustrates profile curves C1 and C2 cut out from a topography map along a first direction and a second direction, respectively.
FIG. 7 exemplarily illustrates a topography map of the foam surface, wherein the gray value of each point in the topography map represents the depth of the corresponding position on the foam surface.
FIG. 8 is a schematic block diagram of an apparatus for online monitoring of foam quality during a foam production process according to an embodiment of the present invention.
FIG. 9 is a flowchart of a method for online monitoring of foam quality during a foam production process according to another embodiment of the present invention.
FIG. 10 is a flowchart of a method for online monitoring of foam quality during foam production according to another embodiment of the present invention.

### DETAILED DESCRIPTION OF THE EMBODIMENT(S) OF THE INVENTION

The present invention will be described in more detail below with reference to the accompanying drawings in which exemplary embodiments of the present invention are illustrated. However, the present invention can be implemented in different forms and should not be construed as being limited to the embodiments given herein. The above-mentioned embodiments are provided to make the disclosure herein comprehensive and complete, so as to convey the protection scope of the present invention to those skilled in the art in a more comprehensive manner.

In the present specification, terms such as "comprising" and "including" mean that in addition to the units and steps that are directly and clearly stated in the specification and claims, the technical solution of the present invention may also include the scenarios including other units and steps that are not directly and clearly stated.

Terms such as "first" and "second" do not indicate the order of the units in terms of time, space, size, etc., but merely serve to distinguish the units.

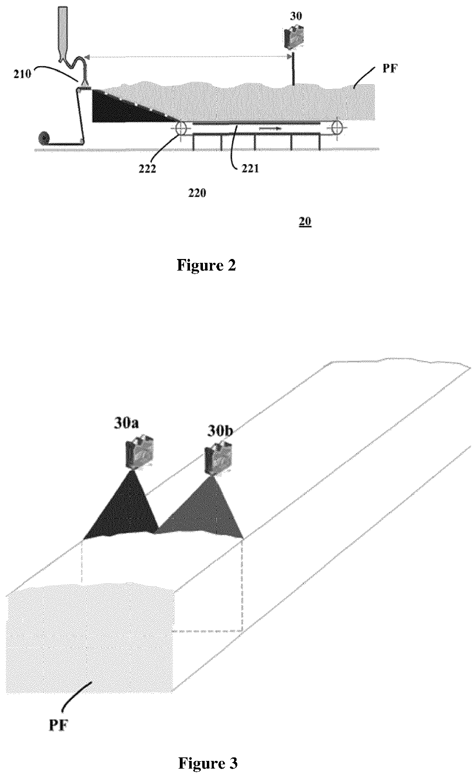

FIG. 2 is a side view of a typical production apparatus using the continuous foam block foaming method. As shown in FIG. 2, a production apparatus using the continuous foam block foaming method 20 includes a mixing nozzle 210, an exhaust duct (not shown), a conveyor 220 and a control system (not shown), where the mixing nozzle 210 is disposed at one end of the conveyor 220. The conveyor 220 includes a transporting slab 221 and a power unit 222 for driving the transporting slab 221 to advance in the direction indicated by the arrow in the figure. Further referring to FIG. 2, the mixing nozzle 210 injects a mixture of raw materials such as polyols, isocyanates, water and auxiliary foaming agents, catalysts, stabilizers and other additives into the transporting slab 221 of the conveyor. The mixture of these raw materials undergoes chemical reactions when being conveyed by the transporting slab 221 through the exhaust duct, thereby forming a block PF (such as a flexible polyurethane foam) of a certain size. In the production apparatus shown in FIG. 2, a control system performs real-time control and monitoring of the entire production process. For example, the control system controls the timing and flow rate of the mixture injection from the mixing nozzle 210 and the advancing speed of the transporting slab 221.

According to one aspect of the present invention, the defects of the foam are determined based on a topography map of the foam surface. In one or more embodiments of the present invention, the topography map is a data set. Each point in the data set corresponds to one of the points on the foam surface, and the spatial position information of the corresponding point on the foam surface is represented by a three-dimensional array (x, y, z), where x, y and z are the spatial coordinate values of the corresponding point on the foam surface. The categories of the defects described herein include, for example, but are not limited to surface crack, collapse, surface blistering, and surface bulging.

According to another aspect of the present invention, a location is selected on the advancing path of the transporting slab, and the cross-sectional profile data of the foam at the location are continuously obtained. The topography map of the foam surface can be obtained by assembling the continuously obtained cross-sectional profiles. The profile data described herein at least include the spatial position coordinates of each point of the profile.

Optionally, in one or more embodiments of the present invention, the profile data for the cross section are top profile data for the cross section. However, it should be pointed out that the top profile is only an example of the cross-sectional profile. In other embodiments of the present invention, the cross-sectional profile data may also include side profile data. Although the following description of the embodiments of the present invention takes defect detection on the top surface of the foam as an example, those skilled in the art, after reading through the specification, will realize that the principle of the present invention embodied in the following description is also applicable to defect detection on other surfaces of the foam.

In order to obtain the top profile data, according to an embodiment of the present invention, a laser sensor or an ultrasonic sensor 30 can be disposed above the foam at the cross section as shown in FIG. 2. The sensor is configured to perform a line scan on the foam in a direction perpendicular to the advancing direction of the transporting slab to obtain the top profile data of the cross section. Since the sensor scans the surface of the foam only along a single straight line, there is no need to perform complex motion correction algorithms when generating the topography map, and there is no need to select a sensor with a high response speed to meet the real-time monitoring requirements.

FIG. 3 is a schematic diagram of obtaining cross-sectional profile data by scanning the top of the foam using laser sensors or ultrasonic sensors according to an embodiment of the present invention. In the embodiment shown in FIG. 3, a dual sensor arrangement is adopted, in which two laser sensors or ultrasonic sensors 30a, 30b are arranged side by side in a direction perpendicular to the advancing direction of the transporting slab, and perform a line scan or a line-by-line scan on the top surface of the foam in the direction of the side-by-side arrangement to obtain the top profile data of the cross section. The areas scanned by the dual sensors may overlap, and the overlapping areas can be merged by image processing technology to obtain a complete top profile data of the cross section.

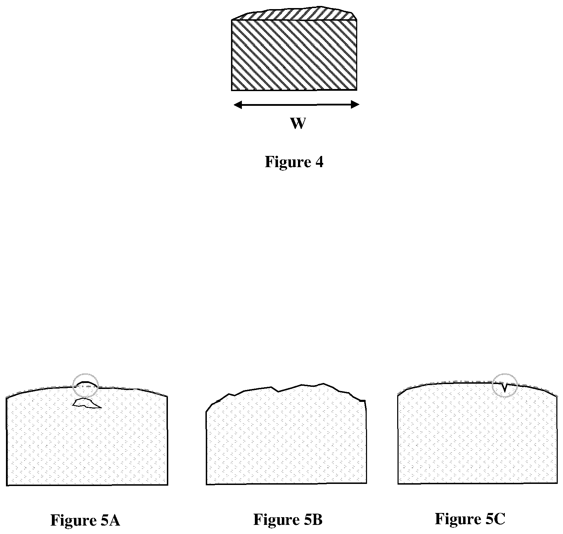

It should be pointed out that the number and arrangement of the aforementioned sensors are only illustrative. In practical applications, more sensors can be used according to the situation. FIG. 4 is a schematic diagram of the cross-sectional top profile of a foam product without surface defects obtained by being scanned by laser sensors or ultrasonic sensors, where w in the figure represents the width of the transporting slab or the foam. During the production process, the top profile of the foam is not necessarily a flat surface, but is undulating as shown in FIG. 4.

FIGs.5A-5C are schematic diagrams of top profiles of cross sections of foam products with surface defects obtained by being scanned with laser sensors or ultrasonic sensors, wherein, FIG. 5A shows a top profile with the defect of surface crack, FIG. 5B shows a top profile with surface blistering, and FIG. 5C shows a top profile with surface bulging. As can be seen from FIGs.5A-5C, the top profile with the defect of surface crack has breaking points in some parts, the top profile with surface blistering has concaves in some parts, and the top profile with surface bulging has convexes in some parts.

According to one or more embodiments of the present invention, the top profiles of the cross sections are assembled in a time sequence to generate a topography map containing only the spatial position information of each of the points of the top profiles of the foam. For example, laser sensors or ultrasonic sensors can be used to scan the top of the foam at a certain time interval or sampling interval to obtain a series of cross-sectional top profiles with a certain time sequence.

Illustratively, it is supposed that the following spatial rectangular coordinate system is used to describe the spatial position of each point on the foam surface: the X axis of the spatial rectangular coordinate system is perpendicular to the advancing direction of the transporting slab and the depth or thickness direction of the foam, the Y axis is parallel to the advancing direction of the transporting slab, and the Z axis is parallel to the depth or thickness direction of the foam. For adjacent cross-sectional top profiles, there are pairs of points (x, y, z) and (x', y', z'), with their coordinate values along the X axis remaining unchanged (x=x'), y'=y+v×Δt, where v is the advancing speed of the transporting slab, Δt is the set scan time interval (i.e., sampling interval), z and z' are the actual measured values. When the scan time interval is relatively large, the interpolation method can be used to insert the fitted cross-sectional top profile data between adjacent cross-sectional top profile data (between y and y' and between z and z') in terms of scan time.

It should be pointed out that the transporting slab can advance in a uniform speed or a variable speed. Preferably, the above-mentioned sampling interval Δt can be changed with the advancing speed v of the transporting slab, so as to ensure that adjacent top profiles are spaced equally along the advancing direction of the transporting slab, that is, to ensure that v×Δt always remains unchanged.

For the topography map generated by assembling the cross-sectional top profiles, a template comparison method can be used to detect the defects of the foam, which is described further below.

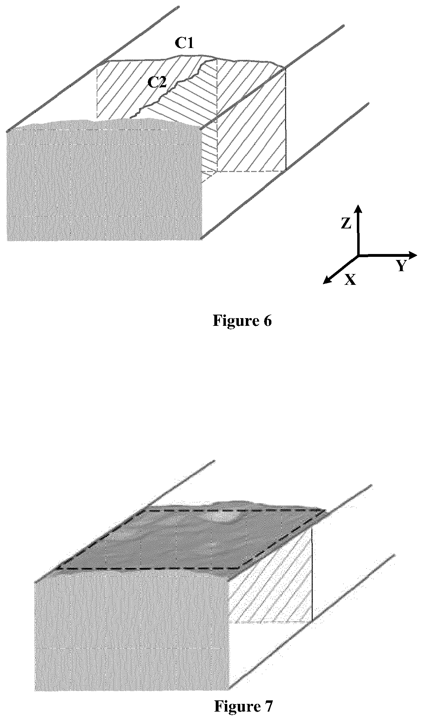

Referring to FIG. 6, it exemplarily illustrates profile curves C1 and C2 cut out from the topography map along a first direction and a second direction, respectively, where the first direction is, for example, the X axis direction, and the second direction is, for example, the Y axis direction, which are perpendicular to each other and at the same time perpendicular to the depth direction of the foam.

When determining the defects, on the one hand, a series of profile curves cut out from the topography map along the first direction are compared with a first standard profile template (FIG. 6 exemplarily shows only one profile curve C1 cut out along the first direction), and on the other hand, a series of profile curves cut out from the topography map along the second direction are compared with a second standard profile template (FIG. 6 exemplarily shows only one profile curve C2 cut out along the second direction). Since the topography map is formed by assembling a plurality of cross-sectional top profiles, the profile curves cut out along the first direction here are namely the aforementioned top profiles of the cross sections.

Optionally, the first standard profile template and the second standard profile template may be in the form of geometric characteristic thresholds determined based on production quality specifications. By comparing the geometric characteristics of the profile curves actually measured with the characteristic thresholds, it can be determined whether there are defects and the categories of the defects. For example, if the difference between the maximum height and the minimum height of the profile curve in a local range exceeds the corresponding threshold, it can be determined that there are blistering or bulging defects on the foam surface; or if the number of continuous breaking points of the profile curve exceeds the corresponding threshold, then it can be determined that there are crack defects on the foam surface.

Optionally, the first standard profile template and the second standard profile template may also be in the form of standard profile curves determined based on production quality specifications (for example, the profile curves shown in FIG. 4). The existence and categories of defects can be determined by calculating the matching degree (such as an overall deviation degree for the whole and the local deviation degree) and the deviation direction between the profile curves actually measured and the standard profile curves.

The above template comparison method simplifies criteria for defect determination, and provides a capability for customized and flexible configuration. For example, for different quality specifications, real-time monitoring of foam quality can be implemented using the corresponding standard profile curves or characteristic thresholds.

In addition to the above-mentioned template comparison method, image recognition methods can also be used to detect foam defects, which will be described further below.

Referring to FIG. 7, a topography map for the foam surface is exemplarily illustrated, where the gray scale value of each point in the topography map represents the depth of the corresponding position on the foam surface (also referred to as the spatial depth value), that is, the distance from the point to the slab. The gray scale representation of the topography map can provide users with an intuitive illustration of the surface topography. Optionally, the topography map shown in FIG. 7 is in the form of a point cloud, with each point in the point cloud representing the spatial position coordinates for the respective points of the top profiles of the foam.

It can be seen from the above that defects such as surface crack, collapse, surface blistering, and surface bulging will cause abrupt changes in local geometric characteristics. Therefore, in one or more embodiments of the present invention, a target region with an abrupt change in depth is first searched for in the point cloud, and then the target region is identified based on a neural network model to determine the existence and categories of the defects. The above-mentioned neural network model can be obtained by training using topography map samples tagged with defects.

Exemplarily, in one or more embodiments of the present invention, the neural network model can be trained in the following manner.

First, obtain a plurality of samples of point cloud. In order to balance the training difficulty and speed of the neural network model, a certain limit can be set to the physical dimensions of L×W corresponding to the respective one of the samples, where L is the physical dimension of the respective sample along the advancing direction of the transporting slab, and W is the width of the foam. Preferably, the physical dimension L can be set to be not less than 100mm.

Second, tag the obtained the samples of point cloud with defects according to predetermined quality standards. Likewise, in order to balance the training difficulty and speed of the neural network model, a certain limit can be set to the physical dimensions of a single defect that is tagged. Preferably, the physical dimensions can be set to be not less than 100mm×100mm, or not less than 10⁴ mm².

Third, it selects some samples from the plurality of samples of point cloud to obtain a training data set. Upon in-depth research, the inventor of the present invention has found that when those samples of point cloud tagged with defect categories occupy a large proportion in the training data set, the training difficulty and speed of the neural network model can be well balanced, especially when the proportion is greater than or equal to 10%.

Finally, train the neural network model using the training data set. The number of trainings can be one or more times. Upon in-depth research, the inventor of the present invention has found that when multiple trainings are performed, if 20% of the samples of point cloud samples in the training data set are retained for the next training upon completion of each training, not only the training speed can be increased, but also the accuracy of defect recognition by the model can also be improved.

The above-mentioned image recognition method has the advantages of easy implementation and high accuracy. In particular, in multiple embodiments of the present invention, it is only necessary to scan the foam surface along a single straight line and the topography of the foam surface is relatively simple. This reduces the complexity of the point cloud, so simple recognition algorithms can be selected to generate the recognition results quickly.

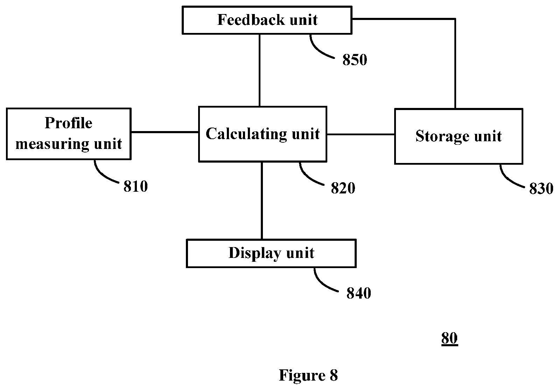

FIG. 8 is a schematic block diagram of an apparatus for online monitoring of foam quality during a foam production process according to an embodiment of the present invention.

As shown in FIG. 8, the apparatus 80 includes a profile measuring unit 810 and a calculating unit 820 coupled to the profile measuring unit 810. Optionally, the apparatus 80 further includes a storage unit 830 configured to store profile data, a display device 840 configured to display foam quality monitoring results, and a feedback unit 850.

The profile measuring unit 810 is configured to continuously obtain profile data for a cross section (such as top profile data) of the foam at a predetermined location to generate a topography map for a surface of the foam, which may be, for example, laser sensors or ultrasonic sensors disposed above the foam at the cross section as described above. The calculating unit 820 is configured to detect defects of the foam based on the topography map of the foam surface. The specific method for defect detection has been described above, and will not be repeated here.

The feedback unit 850 is communicatively coupled to the calculating unit 820, the storage unit 830, and the production line control system (not shown), and is configured to send the defect detection results generated by the calculating unit 820 to the production line control system, or extract the defect detection results from the storage unit 830 and send the defect detection results to the production line control system. Accordingly, the production line control system can optimize the process parameters and/or formulations in the product manufacturing schemes by making comparison among respective defect detection results for the plurality of product manufacturing schemes. It should be pointed out that the expression "and/or" here means that both the process parameters and the formulations can be included at the same time, or one of the process parameters and the formulations can be included. Examples of process parameters include, for example, but are not limited to, the advancing speed of the transporting slab, and the temperature and injection speed of the raw materials injected.

It should be pointed out that the apparatus 80 of the embodiment shown in FIG. 8 can be one unit of the control system in the aforementioned production apparatus using the continuous foam block foaming method 20, or one independent of the control system in the production apparatus using the continuous foam block foaming method 20.

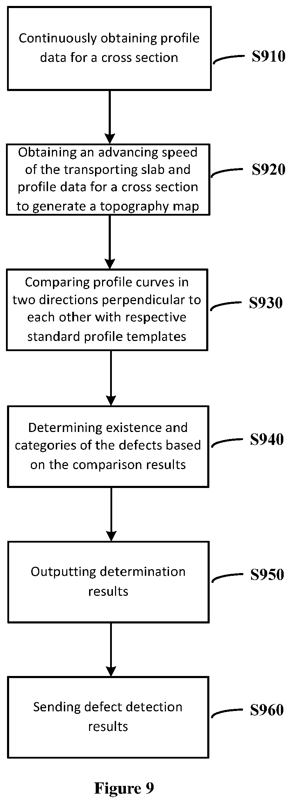

FIG. 9 is a flowchart of a method for online monitoring of foam quality during a foam production process according to another embodiment of the present invention. For an illustrative purpose, the method of this embodiment is implemented with the aid of the apparatus shown in FIG. 8. However, it should be pointed out that the implementation of the method in this embodiment is not limited to an apparatus with a specific structure.

As shown in FIG. 9, in step S910, the profile measuring unit 810 continuously obtains the profile data for the cross section (such as top profile data) of the foam at a predetermined location, and stores the profile data for the cross section obtained in the storage unit 830. The profile data for the cross section can be used to generate a topography map of the foam surface, and the predetermined location is on the advancing path of the transporting slab.

Subsequently, in step S920, the calculating unit 820 obtains the advancing speed of the transporting slab from the control system and acquires the cross-sectional profile data from the storage unit 830, thereby generating a topography map of the foam surface.

Then, in step S930, the calculating unit 820 compares a profile curve cut out from the topography map along a first direction with a first standard profile template, and compares a profile curve cut out from the topography map along a second direction with a second standard profile template.

Subsequently, in step S940, the calculating unit 820 determines the existence and categories of the defects based on the comparison results. The specific determination method has been described above, and will not be repeated here.

Next, in step S950, the calculating unit 820 outputs the determination results obtained in step S940 to the display unit 840.

Optionally, in step S960, the feedback unit 850 sends the defect detection results generated by the calculating unit 820 to the production line control system, or extracts the defect detection results from the storage unit 830 and sends the defect detection results to the production line control system, such that the production line control system can optimize the process parameters and/or formulations in the product manufacturing schemes by making comparison among respective defect detection results for the plurality of product manufacturing schemes.

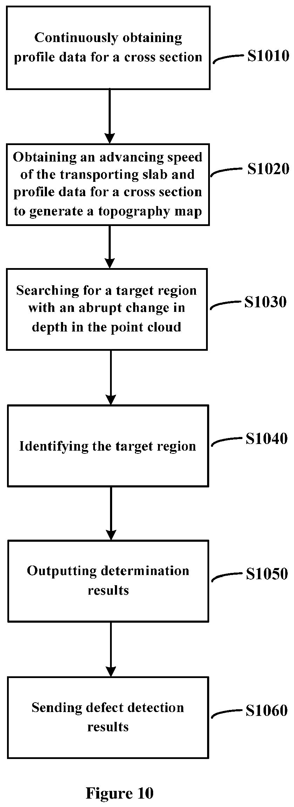

FIG. 10 is a flowchart of a method for online monitoring of foam quality during foam production according to another embodiment of the present invention. Exemplarily, the method of this embodiment is implemented with the aid of the apparatus shown in FIG. 8. However, it should be pointed out that the implementation of the method in this embodiment is not limited to an apparatus with a specific structure.

As shown in FIG. 10, in step S1010, the profile measuring unit 810 continuously obtains the profile data for the cross section (such as top profile data) of the foam at a predetermined location, and stores the profile data for the cross section obtained in the storage unit 830. The profile data for the cross section can be used to generate a topography map of the foam surface, and the predetermined location is on the advancing path of the transporting slab.

Subsequently, in step S1020, the calculating unit 820 obtains the advancing speed of the transporting slab from the control system and acquires the top cross-sectional data from the storage unit 830, thereby generating a topography map in the form of a point cloud.

Next, in step S1030, the calculating unit 820 searches for a target region with an abrupt change in depth in the point cloud.

Subsequently, in step S1040, the target region is identified based on a neural network model to determine the existence and categories of the defects. The above-mentioned neural network model can be obtained by training using topography map samples tagged with defects.

Next, in step S1050, the calculating unit 820 outputs the determination results obtained in step S1040 to the display unit 840.

Optionally, in step S1060, the feedback unit 850 sends the defect detection results generated by the calculating unit 820 to the production line control system, or extracts the defect detection results from the storage unit 830 and sends the defect detection results to the production line control system, such that the production line control system can optimize the process parameters and/or formulations in the product manufacturing schemes by making comparison among respective defect detection results for the plurality of product manufacturing schemes.

The principles and preferred embodiments of the present invention are described above. However, the present invention should not be construed as being limited to the specific embodiments discussed herein. The above-mentioned preferred embodiments should be considered as illustrative but not restrictive, and it should be understood that those skilled in the art can, without departing from the scope of the present invention defined by the appended claims, make changes to these embodiments.

## Claims

1. A method for online monitoring of foam quality during a foam production process, wherein raw materials for foam production are injected onto a transporting slab of a conveyor via a mixing nozzle disposed at one end of the conveyor, the method comprising:
continuously obtaining profile data for a cross section of the foam at a predetermined location to generate a topography map for a surface of the foam, the predetermined location being one along an advancing path of the transporting slab; and
detecting foam defects based on the topography map for the surface of the foam.

2. The method of claim 1, wherein the profile data for the cross section are top profile data for the cross section.

3. The method of claim 2, wherein the top profile data are obtained using laser sensors or ultrasonic sensors disposed above the foam at the cross section to perform a line scan on a top surface of the foam.

4. The method of claim 2 or 3, wherein the top profile data comprise spatial position coordinates for respective points of top profiles of the foam, the topography map is obtained by assembling a plurality of top profiles obtained at a sampling interval, the sampling interval changing with an advancing speed of the transporting slab so as to ensure that adjacent top profiles are spaced equally along the advancing direction of the transporting slab,
wherein the defects of the foam are detected by:
comparing a profile cut out from the topography map along a first direction with a first standard profile template, and comparing a profile cut out from the topography map along a second direction with a second standard profile template, wherein the first and second directions are perpendicular to a depth direction of the foam and are perpendicular to each other; and
determining existence and categories of the defects based on the comparison results.

5. The method of claim 4, wherein the first standard profile template and the second standard profile template are in the form of characteristic thresholds or standard profile curves determined based on production quality specifications.

6. The method of claim 2 or 3, wherein the top profile data comprise spatial position coordinates for respective points of top profiles of the foam, the topography map is in the form of point cloud including the spatial position coordinates for the respective points of the top profiles of the foam,
wherein the defects of the foam are detected by:
searching for a target region with an abrupt change in depth in the point cloud; and
determining existence and categories of the defects using a neural network model to identify the target region.

7. The method of claim 6, wherein the neural network model is trained by:
obtaining a plurality of samples of point cloud, each of which has physical dimensions of L×W, where L corresponds to the physical dimension of the respective sample of point cloud along the advancing direction of the transporting slab and is not larger than a first threshold, and W corresponds to a width of the foam;
tagging the samples of point cloud based on predetermined quality standards, wherein for a single defect that is tagged, its corresponding physical area is not larger than a second threshold;
selecting a training data set from the samples of point cloud, wherein a proportion of the number of the samples of point cloud tagged with defect categories to the total number of the samples of point cloud of the training data set is not smaller than a first proportion; and
iteratively training the neural network model using the training data set, wherein a second proportion of the samples of point cloud in the training data set are retained for the next training upon completion of each training.

8. The method of claim 4 or 6, wherein the categories of the defects include surface crack, collapse, surface blistering and surface bulging.

9. The method of claim 1 or 2, wherein the foam is flexible polyurethane (PUR) foam.

10. The method of claim 1 or 2, wherein the method further comprises:
optimizing process parameters and/or formulations in the product manufacturing schemes by making comparisons among respective defect detection results for a plurality of product manufacturing schemes.

11. An apparatus for online monitoring of foam quality during a foam production process, wherein raw materials for foam production are injected onto a transporting slab of a conveyor via a mixing nozzel disposed at one end of the conveyor, the apparatus comprising:
a profile measuring unit configured to continuously obtain profile data for a cross section of the foam at a predetermined location along an advancing path of the transporting slab; and
a calculating unit configured to generate a topography map for a surface of the foam from the profile data for the cross section and detect foam defects based on the topography map for the surface of the foam.

12. The apparatus of claim 11, further comprising:
a feedback unit communicatively coupled to a production line control system, configured to transmit defect detection results to the production line control system, so that the production line control system optimizes process parameters and/or formulations in the product manufacturing schemes by making comparisons among respective defect detection results for the plurality of product manufacturing schemes.

13. The apparatus of claim 11, wherein the profile data for the cross section are top profile data for the cross section.

14. The apparatus of claim 13, wherein the profile measuring unit comprises laser sensors or ultrasonic sensors disposed above the foam at the cross section configured to perform a line scan on a top surface of the foam to obtain the top profile data.

15. The apparatus of claim 13 or 14, wherein the top profile data comprise spatial position coordinates for respective points of top profiles of the foam, the topography map is obtained by assembling a plurality of top profiles obtained at a sampling interval, the sampling interval changing with an advancing speed of the transporting slab so as to ensure that adjacent top profiles are spaced equally along the advancing direction of the transporting slab,
wherein the calculating unit is configured to detect the defects of the foam by:
comparing a profile cut out from the topography map along a first direction with a first standard profile template, and comparing a profile cut out from the topography map along a second direction with a second standard profile template, the first standard profile template and the second standard profile template preferably being in the form of characteristic thresholds or standard profile curves determined based on production quality specifications, wherein the first and second directions are perpendicular to a depth direction of the foam and are perpendicular to each other; and
determining existence and categories of the defects based on the comparison results.
